Europäisches Patentamt

European Patent Office

Office européen des brevets

(19)

(11) Publication number: **0 682 057 A1**

## EUROPEAN PATENT APPLICATION

(12)

(21) Application number: **95201141.9**

(22) Date of filing: **03.05.95**

(51) Int. Cl.⁶: **C08G 69/48**, C08G 63/91, C08G 18/10, C08G 73/02

(30) Priority: **09.05.94 BE 9400476**

(43) Date of publication of application:
**15.11.95 Bulletin 95/46**

(84) Designated Contracting States:
**DE FR GB IT NL**

(71) Applicant: **DSM N.V.**
**Het Overloon 1**
**NL-6411 TE Heerlen (NL)**

(72) Inventor: **Borggreve, Reinoldus J.M.**
**Frank Smitsstraat 1**
**NL-6336 VG Hulsberg (NL)**
Inventor: **Beusen, Guido P.C.**
**Roosevelthof 15**
**NL-6336 EL Nuth (NL)**
Inventor: **Sham, Chi Keung**
**Bergstraat 60**
**NL-6174 RS Schinnen (NL)**
Inventor: **Nijenhuis, Atze Jan**
**Gangeltstraat 2**
**NL-6132 HB Sittard (NL)**
Inventor: **Serné, Martien**
**Karel van Egmondstraat 16**
**NL-6137 HT Sittard (NL)**

(54) **Process for improvement of the processing characteristics of a polymer composition and polymer compositions obtained therefrom.**

(57) The invention relates to a process for improvement of the processing characteristics of polymer compositions. By adding to the melt of polymers having a hetero atom in the chain a quantity of 0.05-5 wt.% of a compound having at least three functional groups, the melt viscosity is lowered strongly without affecting the mechanical properties. The invention is particularly effective for high-molecular and/or highly filled compositions.

EP 0 682 057 A1

The invention relates to a process for improvement of the processing characteristics of polymer compositions, more in particular improvement of the flow properties. In the case of highly filled or high-molecular polymer compositions the problem arises that the melt viscosity of the polymer composition is so high that practical problems are encountered in the processing. For instance, in injection moulding it is virtually impossible to fill the mould completely, or during the melt mixing and transport the heat generation is such that locally very high temperatures occur, resulting in chain decomposition and/or discoloration of the polymer, while moreover an excessive amount of energy is required for the extrusion. Another objection is that the surface of for instance glassfibre-reinforced compositions shows mat spots.

Also with the help of known flow agents it is not possible in most cases to obtain an adequate solution to this problem. Moreover, the customary waxes and metal stearates present the drawback of so-called 'exudation', resulting in a less attractive surface of the moulding obtained from the melt, and in fouling of the mould used.

Very surprisingly it has been found now that by applying compounds having at least three functional groups for a specific group of polymers, highly improved flow properties can be obtained.

The process according to the invention for improvement of the flow properties of a polymer composition is characterized in that the polymer has hetero atoms in the chain and the polymer is mixed in the melt with 0.05-5 wt.% of a compound having at least three functional groups.

The use of compounds having more than two functional groups in polymers of the above-mentioned type is known from, inter alia, EP-A-0360060 and EP-A-0345648. In these patent publications the compound having more than two functional groups is added during the polymerization process in order to obtain a polymer of a higher viscosity. In example 3 of EP-A-0360060 for instance the addition of 0.65 wt.% of lysine during the polymerization of polyamide 6 from $\epsilon$-caprolactam results in a 130% increase of the melt viscosity, while the relative viscosity is lowered by 0.2.

It is very surprising that addition of these multifunctional compounds to the melt of said polymers by contrast results in a very substantial reduction of the melt viscosity without negatively affecting the mechanical properties of the mouldings obtained via this melt route.

Polymers which are suitable for the process have hetero atoms in the chain, for instance O, S or N. Examples of such polymers are polyamides, polyurethanes, polyesters, polyimines, polyoxyalkylenes and copolymers thereof. Preferably these polymers are not or only slightly branched.

The polyamides may have been obtained either through polycondensation of di-acids and diamines or $\alpha,\omega$-amino acids or through ring opening polymerization of lactams. Nylon 4.6, 6.6, 6.10. 6.12, 6.36, 6.T and 6.I and nylon 4, 6, 8, 10, 11, 12, etc. and copolymers thereof can be used for instance. Particularly suitable are polyamides obtained by polycondensation of $\alpha,\omega$-amino acids and by ring opening polymerization of lactams.

The polyesters may have been obtained for instance by polycondensation of hydroxy(carboxylic) acids, diols and di-acids, diols and derivatives of dicarboxylic acids, for instance dicarboxylic acid anhydrides or esters, and ring opening polymerization of lactones. The group of polyesters is understood also to include polysulphones and polycarbonates. Examples of suitable polyesters are, inter alia, polyethylene terephthalate, polybutylene terephthalate, polyethylene naphthalate, polyether sulphone and copolymers thereof, for instance poly(ether ester)s. Preferred are polyester derived from hydroxy carboxylic acids and lactones, for instance poly-$\epsilon$-caprolactone.

A suitable polyoxyalkylene is polyoxyethylene for instance.

In 'compound having at least three functional groups' a functional group is understood to be a reactive group capable of reacting with a chain fragment formed when chain scission occurs at the hetero atom in the polymer with the hetero atom in the chain, which reaction results in the chain fragment being coupled to the compound having at least three functional groups. The chain scission is preferably initiated by the functional group of the compound.

Suitable functional groups in general are hydroxyl or thiol, (carboxylic) acid, nitrile, isocyanate, imine and amine groups, which may optionally be substituted. Groups which can yield said functional groups may also be used.

Preference is given to compounds in which the functional groups are identical, and which compounds possess good thermal stability to withstand the temperatures used in processing the compositions. The highest preference is given to compounds with symmetrical molecules.

In the case of polyamides, high-boiling tris or higher functional amines or imines are preferably used. Particularly suitable are dendrimeric compounds, known examples of which are the 'starburst' poly(ethylene amine)s synthetized by Tomalia et al., Polym. J. 17, 117 (1985) and US-A-4,537,329 and 4,631,337, and the dendrimeric compounds poly(propylene imine)s, obtained by Michael condensation reaction of acrylonitrile and diaminobutane, followed by hydrogenation of the nitrile groups to terminal amine groups, to which acrylonitrile can subsequently be coupled again by Michael condensation, followed by hydrogenation, etc., described in Angewandte Chemie, Int. Ed., 32 (9) 1308-1311 (1993). Special preference is given to dendrimeric compounds of the latter type, which exhibit particularly good thermal stability and can be produced on a large scale.

Very advantageous are also triazine derived compounds, for instance 2,4,6-triaminocaproic acid-1,3,5-triazine, that have high thermal stability and do not discolor during processing.

The preparation of such compounds is disclosed for instance in H. Nestler et al. J. für Praktische Chemie 22 (4), 173-185 (1963).

If the application concerns polyesters, compounds with three or more hydroxyl groups are very suitable, and the above-mentioned amines and compounds with three or more acid terminal groups, for instance aromatic tricarboxylic acid, for instance 1,3,5-benzenetricarboxylic acid.

The process according to the invention is particularly suitable for polymers with a high melting point, for instance higher than 160°C, preferably higher than 180°C. The process is particularly advantageous in the case of polymers having a melting point higher than 220°C.

The molecular weight of the polymer with the hetero atom in the chain may vary within wide limits; the number average molecular weight may for instance be between 10,000 and 100,000.

The process according to the invention has the greatest useful effect for polymers having a relatively high molecular weight, for instance higher than 20,000, preferably higher than 30,000 and still more preferably higher than 40,000. The greatest effect is obtained in the case of polymers having molecular weights higher than 50,000.

The quantity in which the compound having at least three functional groups is to be applied may vary between 0.025 and 5 wt.% relative to the polymer. Below 0.025 wt.% the effect is low, above 5 wt.% an undesirable reduction of the mechanical properties of the polymer may occur. Depending on the polymer, its molecular weight, and the compound having at least three functional groups which has been chosen, concerning for instance the type and number of the functional groups, the average person skilled in the art will choose the most suitable concentration by experimenting systematically. In general, if the functionality is high a small quantity of compound will suffice, while for instance a high molecular weight offers more scope for variation of the concentration of multifunctional compound to be added.

The usual equipment for melt mixing, for instance Brabender mixers and extruders, can be used to put the process according to the invention into practice. Preference is given to extruders with a high L/D ratio, for instance 30, which ensures very intensive mixing. The retention time in the mixing equipment may vary within wide limits, for instance between 0.5 and 20 minutes. With shorter retention times the melt viscosity is often lowered insufficiently and no stable condition is reached, while with retention times longer than 20 minutes thermal degradation and discoloration of the polymer may occur. Preferably the average retention time is chosen between 1 and 10 minutes.

The polymer may be premixed dry or wet with the multifunctional compound, with due care being required to ensure a homogeneous distribution. However, the polymer and the compound may also be supplied separately to the mixing equipment, for instance an extruder. The melt mixing is preferably effected in an inert atmosphere, for instance under nitrogen.

Besides the polymer with the hetero atom in the chain, the polymer composition may contain the usual additives, for instance fillers, reinforcing fibres, impact modifiers, for instance modified or non-modified rubbers, stabilizers, colourants and pigments, flame retardants, release agents, etc. Other polymers may also be present besides the polymer with the hetero atom in the chain.

The process is particularly effective for polymer compositions having a high content of fillers and/or reinforcing fibres.

Very surprisingly it appears that compositions containing an impact modifier exhibit an improved flow behaviour besides an increase in impact resistance and elongation at break. The additives content may vary within wide limits - for instance per 100 parts by wt. of polymer 0.1 to 200 parts by wt. of additive may be present - and is mainly determined by the processability.

The invention will now be elucidated by means of the following non-restrictive examples.

The following test methods were used for characterization of the compositions:

| - notch impact resistance: | ASTM D256, | 23°C KJ/m$^2$ |
|---|---|---|
| - stress-strain test: | ASTM 638, | 23°C |
| stress at break | | N/mm$^2$ |
| elongation at break | | % |
| - bending test with three-point loading: | ASTM D790, 23°C | |
| E-modulus | | N/mm$^2$ |
| - Dynamic Mechanical Analysis: | | |
| Rheometrics 800 sheet/sheet, 240°C, | | |
| measured from high to low frequency. | | |
| $\eta_o$ (melt viscosity) | | Pa.s |
| - Solution viscometry: at 25°C in 90% | | |
| formic acid (0.5 g/100 ml). | | |
| Viscosity number, VGm and $\eta_{rel}$: ISO | | |
| 307. | | |

Example I

Polyamide 6[1] is premixed with different quantities of the first-generation dendrimer 4-cascade: 1,4-diaminobutane[4]:propylamine (N,N'tetrabis(3-aminopropyl)-1,4-butane diamine) and mixed in the melt on a Berstorff twin-screw extruder ZSE 25 (L/D = 33) under nitrogen at a cylinder temperature setting of 200-230°C, at 300 rpm. The retention time is about 3 minutes, the throughput about 2 kg/h. During the extrusion the die head pressure and torque are measured. On an Arburg 9 injection moulding machine the granulate is processed to test bars at a temperature setting of 240-260°C, a mould temperature of 80°C and a cycle time of about 47 sec. The injection pressure is measured. The melt viscosity is determined on the granulate.

The results of the characterization are presented in Table 1.

TABLE 1

| PA 6 [parts by wt.] | 95.0 | 98.0 | 99.0 | 99.5 | 99.9 | 99.95 | 99.975 | 100 |
|---|---|---|---|---|---|---|---|---|
| DAB(PA)$_4$ [parts by wt.] | 5.0 | 2.0 | 1.0 | 0.5 | 0.1 | 0.05 | 0.025 | 0 |
| die head pressure [bar] | 2 | 3 | 4 | 5 | 8 | 11 | 13 | 13 |
| moment [Nm] | 35 | 44 | 46 | 55 | – | – | – | 77 |
| Melt T °C | 263 | 265 | 266 | 270 | 274 | 277 | 277 | 277 |
| injection pressure [bar] | 50 | 52 | 57 | 83 | – | – | – | 120 |
| Izod 23°C [kJ/m$^2$] | 5.6 | 5.6 | 6.1 | 6.5 | 6.1 | – | – | 6.4 |
| E-modulus [N/mm$^2$] | 2650 | 2990 | 2980 | 2980 | – | – | – | 3000 |
| melt viscosity (ω=0) [Pa.s] | 170 | 300 | 390 | 580 | 1200 | 1550 | 2100 | 2700 |

A strong decrease of the die head pressure and the torque moment for the extrusion are seen. Also, a significantly lower injection pressure for the injection moulding is sufficient. Stiffness and impact resistance remain at the same level.

5

Example II

Example I was repeated, but nylon 6.6 was used instead of nylon 6.

TABLE 2

| PA 6.6 [parts by wt.] | 100 | 99.5 | 99 | 98 | 95 |
|---|---|---|---|---|---|
| DAB(PA)$_4$ [parts by wt.] | 0 | 0.5 | 1 | 2 | 5 |
| die head pressure [bar] | 31 | 22 | 19 | 18 | 7 |
| moment [Nm] | 89 | 79 | 74 | 75 | 63 |
| injection pressure [bar] | 65 | 52 | 44 | 38 | 37 |
| stress at break [N/mm$^2$] | 83 | 88 | 93 | 70 | 48 |
| elongation [%] | 8 | 14 | 7 | 5 | 3 |

Example III

Several polyamide and polyester compositions containing 30 wt.% of glassfibre reinforcement are tested with and without addition of DAB(PA)$_4$; the results are given in Table 3.

TABLE 3

| | PA 6 | | PA 6.6 | | PBT | |
|---|---|---|---|---|---|---|
| DAB(PA)₄ [wt.%] | 0 | 0.5 | 0 | 0.5 | 0 | 0.35 |
| die head pressure [bar] | | | | | 41 | 23 |
| moment [Nm] | | | | | 87 | 65 |
| Melt T [°C] | | | | | 260 | 258 |
| spiral flow length [cm] (T = 250°C, 120 bar) | 43 | 57 | 50 | 69 | 41 | 59 (47) |
| stress at break [MPa] | 171 | 179 | 188 | 182 | 135 | 118 (151) |
| E-modulus [MPa] | 9500 | 9500 | 9600 | 9700 | 9670 | 9070 (10050) |
| Izod notched [kJ/m²] | 10 | 9.5 | 9 | 8.6 | 9 | 7.5 (10.1) |
| Rel. viscosity | 2.46 | 2.22 | 2.26 | 2.07 | 1.9 | 1.7 (1.9) |

The setting temperature for the extruder is 250°C for PBT. For PA 6 and 6.6 the conditions of examples I and II were applied. In the above experiments the compositions with the multifunctional compound show a very significant increase (over 40%) of the spiral flow length. The figures in brackets ( ) for PBT refer to the properties of the compositions which after extrusion were subjected to aftercondensation in the solid phase so that it got the same relative viscosity as the composition to which no multifunctional compound had been added. Moreover, an improved surface is obtained compared with the compositions with no addition.

Example IV

A composition of 80 parts by wt. of Akulon K123® (nylon 6 with a relative viscosity of about 2.3, from DSM) and 20 parts by wt. of Tafmer MP0610® (a modified ethene/propene rubber, from Mitsui) was mixed in the melt in an extruder, ZSK-W&P, with a temperature setting of 280°C. The effect of the addition of 0.5 part by wt. of DAB(PA)$_4$ on the processing characteristics and mechanical properties of the composition obtained is determined.

| DAB(PA)$_4$ wt.% | 0 | 0.5 |
|---|---|---|
| tensile strength [MPa] | 37 | 39 |
| elongation at break [%] | 48 | 86 |
| Izod (notched) [kJ/m$^2$] | 63 | 79 |
| spiral flow length | 44 | 54.5 |

Besides an improvement of the flow, the toughness of the resulting composition very surprisingly shows a very great improvement.

Example V

2,4,6 Triaminocaproic acid-1,3,5-triazine was dry-blended in different amounts with Akulon K136®, a nylon-6 with relative viscosity of 3.6. On a Berstorff double screw extruder ZSE 25 (L/D = 33) these mixtures were moulded under the following conditions: $T_{cylinder}$ = 200-230°C. 250 rotations per minute, throughput = 2 kg/h, under nitrogen atmosphere, and degassed (- 0,5 bar). Residence time is about 3 minutes. Of the extrudate, cut into pellets, on an Arburg 4 injection moulding machine, $T_{cylinder}$ = 240-260°C, $T_{mould}$ = 80°C, test specimen for mechanical testing have been produced (cycle time 33 sec). The properties of the different compositions and characteristics of processing are shown in Table 4.

TABLE 4

| composition [wt.%] | 01 | 02 | 03 | 04 |
|---|---|---|---|---|
| Akulon K136® | 100 | 99.75 | 99.5 | 99.0 |
| 2,4,6-triamino-caproic acid-1,3,5-triazine | - | 0.25 | 0.5 | 1.0 |
| couple [amp] | 6.3 | 6.0 | 5.3 | 4.7 |
| $T_{melt}$ [°C] | 274 | 272 | 266 | 262 |
| Injection pressure [bar] | 64 | 60 | 56 | 48 |
| Izod 23°C [kJ/m$^2$] | 4.6±0.5 | 5.7±1.1 | 5.2±0.9 | 5.6±0.2 |
| E-modulus 23°C [N/mm$^2$] | 2850 | 2810 | 2900 | 2770 |
| Elongation | 55±20 | 65±15 | 50±20 | 35±5 |
| Melt viscosity ($\omega$ = o) [Pa.s] | 3000 | 2300 | 950 | 450 |

**Claims**

1. Process for improvement of the processing characteristics of polymer compositions, characterized in that the polymer has hetero atoms in the chain and the polymer is mixed in the melt with 0.05-5 wt.% of a compound having at least three functional groups.

2. Process according to claim 1, characterized in that the hetero atoms are chosen from the group comprising oxygen, nitrogen and sulphur.

3. Process according to claim 2, characterized in that the polymer is chosen from the group comprising polyamides, polyurethanes, polyesters, polyimines, polyoxyalkylenes and copolymers thereof.

8

4. Process according to claim 3, characterized in that the polyamide has been obtained through ring opening polymerization of lactams or through polycondensation of or $\alpha,\omega$-amino acids

5. Process according to claim 3, characterized in that the polyester has been obtained through ring opening polymerization of lactones.

6. Process according to claim 1, characterized in that the compound having at least three functional groups is a compound with groups chosen from hydroxyl, thiol, (carboxy) acid, nitrile, isocyanate, imine and amine groups, which may optionally be substituted, and groups which can yield said functional groups.

7. Process according to claim 6, characterized in that the compound having at least three functional groups is chosen from the group of triazine trisamino acid derivatives and aromatic tricarboxylic acids.

8. Process according to claim 7, characterized in that the triazine trisamino acid derivative is 2,4,6-triaminocaproic acid-1,3,5-triazine.

9. Process according to claim 7, characterized in that the aromatic tricarboxylic acid is 1,3,5-benzenetricarboxylic acid.

10. Process according to claim 1, characterized in that the polymer is a polyamide and the compound is a tris or higher functional amine or imine.

11. Process according to claim 10, characterized in that the tris or higher functional amine or imine [is] a dendrimeric compound.

12. Process according to claim 1, characterized in that the polymer is a polyester and that the compound contains three or more hydroxyl groups.

13. Process according to claim 1, characterized in that the polymer is a polyester and that the compound is a tris or higher functional amine or imine.

14. Process according to claim 13, characterized in that the compound is a dendrimeric compound.

15. Process according to claim 1, characterized in that the number average molecular weight of the polymer is between 10,000 and 100,000.

16. Process according to any one of the preceding claims, characterized in that the composition also contains a filler.

17. Process according to any one of the preceding claims, characterized in that the composition contains an impact modifier.

18. Polymer composition obtained by the process according to any one of the preceding claims.

19. Moulding produced with the polymer composition according to claim 18.

9

European Patent Office

# EUROPEAN SEARCH REPORT

Application Number

EP 95 20 1141

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | EP-A-0 345 648 (EMS-INVENTA) --- | | C08G69/48 C08G63/91 C08G18/10 C08G73/02 |
| A | EP-A-0 360 062 (BAYER) --- | | |
| D,A | EP-A-0 360 060 (BAYER) --- | | |
| A | EP-A-0 149 986 (MONSANTO) --- | | |
| A | EP-A-0 115 771 (DOW CHEMICAL) | | |
| D,A | & US-A-4 631 337 (D.A. TOMALLA ET AL) ----- | | |

| | |
|---|---|
| | TECHNICAL FIELDS SEARCHED (Int.Cl.6) |
| | C08G |

The present search report has been drawn up for all claims

| Place of search | Date of completion of the search | Examiner |
|---|---|---|
| THE HAGUE | 28 June 1995 | Leroy, A |

EPO FORM 1503 03.82 (P04C01)